# EUROPÄISCHE PATENTSCHRIFT

(11) **EP 1 153 770 B1**
(45) Veröffentlichungstag und Bekanntmachung des Hinweises auf die Patenterteilung: **28.07.2004**
(21) Anmeldenummer: 01109817.5
(22) Anmeldetag: 21.04.2001
(51) Int. Cl.: B60D 1/54

(54) **Anhängerkupplung**
Trailer coupling
Attelage de remorque

(30) Priorität: 13.05.2000 DE 10023640
(43) Veröffentlichungstag der Anmeldung: 14.11.2001
(73) Patentinhaber: FAC Frank Abels Consulting & Technology GmbH, 29633 Munster (DE)
(72) Erfinder: Abels, Frank O., 29633 Munster (DE)
(74) Vertreter: Reimold, Otto, Dipl.-Phys.Dr.

(56) Entgegenhaltungen:
- EP-A- 1 024 036
- DE-A- 19 848 487
- US-A- 6 000 709

## Beschreibung

Die Erfindung betrifft eine Anhängerkupplung für Kraftfahrzeuge, insbesondere Personenkraftwagen, mit einem Kupplungsarm, der einenends ein hochstehend angeordnetes Kopfstück zum lösbaren Befestigen eines Anhängers trägt und andernends mit einem verdrehbar in einem Drehlagerteil gelagerten Drehachsglied fest verbunden ist, wobei der Kupplungsarm mittels einer vom Fahrzeug-Innenraum aus einschaltbaren Motoranordnung zwischen einer im am Fahrzeug montierten Zustand nach hinten gerichteten Gebrauchsstellung und einer weiter vorne und höher angeordneten Nichtgebrauchsstellung hin und her verstellbar ist und wobei die Verstellbewegung sich aus zwei Bewegungsabschnitten zusammensetzt, indem der Kupplungsarm, ausgehend von der Gebrauchsstellung, in einem ersten Bewegungsabschnitt durch Verdrehen des Drehachsglieds im eine Hochstellung einnehmenden Drehlagerteil nach vorne in eine Zwischenstellung verschwenkt und anschließend im zweiten Bewegungsabschnitt in einer Querebene aus der Zwischenstellung in die Nichtgebrauchsstellung nach oben bewegt wird.

Feststehende Anhängerkupplungen, die mit ihrem Kupplungsarm unterhalb des rückseitigen Stoßfängers des Fahrzeugs nach hinten hin vorstehen, beeinträchtigen den optischen Eindruck insbesondere von Personenkraftwagen. Daher scheuen manche Fahrzeugbesitzer den Anbau einer solchen Kupplung und verzichten somit auf die Möglichkeit, einen Anhänger an ihr Fahrzeug anzukuppeln.

Eine an sich bekannte Anhängerkupplung der eingangs genannten Art geht ebenfalls aus der nicht vorveröffentlichten deutschen Patentanmeldung 100 04 523.5 hervor, die hier Abhilfe schafft. Bei ihr ist der Kupplungsarm, wird die Anhängerkupplung nicht benötigt, in der Nichtgebrauchsstellung sozusagen versteckt untergebracht, so dass er dem Blick eines Betrachters entzogen ist. Will der Fahrer die Anhängerkupplung benutzen, muss er lediglich ein im Innenraum des Fahrzeugs in seiner Reichweite angeordnetes Bedienelement betätigen. Hierdurch wird die Motoranordnung in Gang gesetzt, so dass der Kupplungsarm eine gesteuerte Bewegung ausführt und in seine Gebrauchsstellung gelangt. Das Zurückbewegen in die Nichtgebrauchsstellung kann mittels des gleichen oder eines weiteren Bedienelements erfolgen.

Der vorliegenden Erfindung liegt die Aufgabe zu Grunde, unter Beibehaltung der Vorteile dieser Anhängerkupplung eine weitere Vereinfachung vorzunehmen.

Diese Aufgabe wird dadurch gelöst, dass das Drehlagerteil um eine rechtwinkelig zur Querebene gerichtete Schwenkachse zwischen seiner Hochstellung und einer Schrägstellung schwenkbar ist und im zweiten Bewegungsabschnitt aus der Hochstellung in die Schrägstellung verschwenkt wird, so dass der Kupplungsarm nach oben schwenkt, dass dem Drehachsglied eine es im zweiten Bewegungsabschnitt verdrehfest bezüglich des Drehlagerteils haltende Führungseinrichtung zugeordnet ist und dass die Motoranordnung von einer beiden Bewegungsabschnitten zugeordneten Antriebseinrichtung gebildet wird, die an einer exzentrisch zur Achslinie des Drehachsgliedes drehfest zu diesem angeordneten Gelenkstelle gelenkig mit dem Drehachsglied verbunden ist, derart, dass, ausgehend von der Nichtgebrauchsstellung, die Antriebseinrichtung über das in seiner Drehlage durch die Führungseinrichtung festgehaltene Drehachsglied das Drehlagerteil gegen ein die Hochstellung des Drehlagerteils vorgebendes Anschlagglied schwenkt, wonach das Drehachsglied von der Führungseinrichtung frei kommt und die Antriebseinrichtung das Drehachsglied bis zu einem die Gebrauchsstellung vorgebenden Anschlagelement verdreht.

Somit ist nur eine einzige Antriebseinrichtung erforderlich. Dabei ergibt sich in der Gebrauchsstellung eine fest verspannte Anordnung, da das Drehachsglied fest gegen das Fahrzeug angeordnete Anschlagelement gepresst wird. Außerdem wird das Drehlagerteil gegen das Anschlagglied gedrückt. Auf diese Weise werden die beim Betrieb auftretenden Kräfte sicher aufgenommen.

Bei einer bevorzugten Ausführungsform ist vorgesehen, dass die Antriebseinrichtung von einer Motorspindel-Antriebseinrichtung gebildet wird. Eine solche Antriebseinrichtung kann selbsthemmend ausgebildet sein, so dass der Kupplungsarm aus seiner Gebrauchsstellung zur Antriebseinrichtung hin nicht ausweichen kann.

Weitere zweckmäßige Ausgestaltungen der Erfindung sind in den Unteransprüchen angegeben.

Ein Ausführungsbeispiel der Erfindung wird nun anhand der Zeichnung erläutert. Es zeigen:
- Figur 1: eine erfindungsgemäße Kupplung im an der Rückseite eines Kraftfahrzeugs montierten Zustand in schematischer Seitenansicht,
- Figur 2: die Anhängerkupplung in Rückansicht in der Nichtgebrauchsstellung, wobei die rückseitige Basisplatte weggelassen und die einen Stoßfänger bildende Heckschürze des Fahrzeugs nur gestrichelt angedeutet ist,
- Figur 3: die gleiche Anhängerkupplung in der Darstellungsweise der Figur 2, wobei der Kupplungsarm in der Querebene in seine Zwischenstellung nach unten verlagert worden ist,
- Figur 4: wiederum die gleiche Anhängerkupplung in den Figuren 2 und 3 entsprechender Rückansicht, wobei der Kupplungsarm seine Gebrauchsstellung einnimmt,
- Figur 5: die gleiche Anhängerkupplung in Draufsicht von oben sowohl in der mit ausgezogenen Linien dargestellten Gebrauchsstellung als auch in der gestrichelt angedeuteten Nichtgebrauchsstellung, wobei die oberseitig angeordnete Führungseinrichtung weggelassen und die Spindel der Motorspindel-Antriebseinrichtung abgeschnitten ist, und

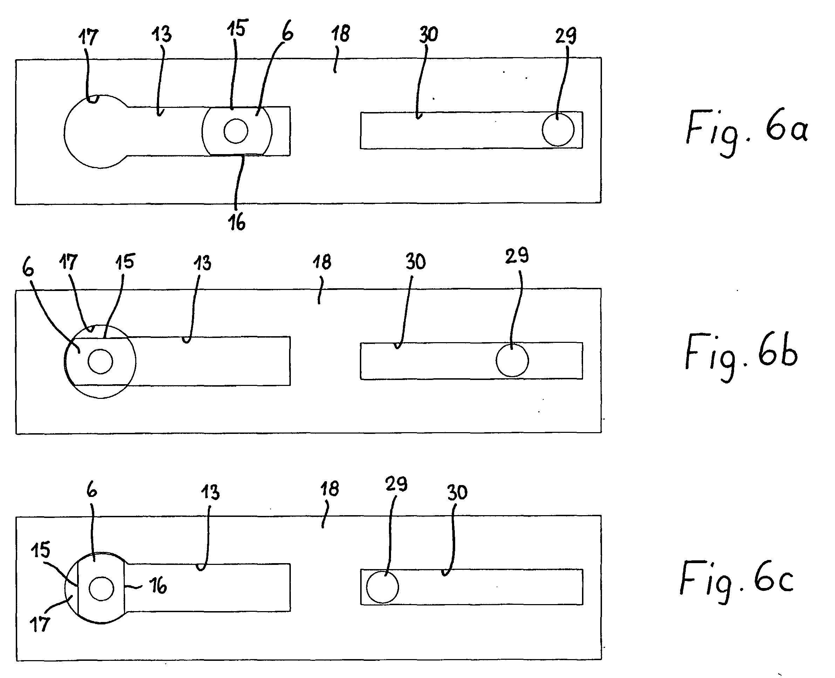

- Figuren 6a, 6b und 6c: eine Draufsicht von oben auf die den Führungsschlitz zur Führung des Drehachsgliedes und die Führungsausnehmung zur Führung des Führungsvorsprungs des Antriebsgehäuses der Motorspindel-Antriebseinrichtung enthaltenden Führungsplatte, wobei die Anordnung in Figur 6a der Nichtgebrauchsstellung, in Figur 6b der Zwischenstellung und in Figur 6c der Gebrauchsstellung entspricht.

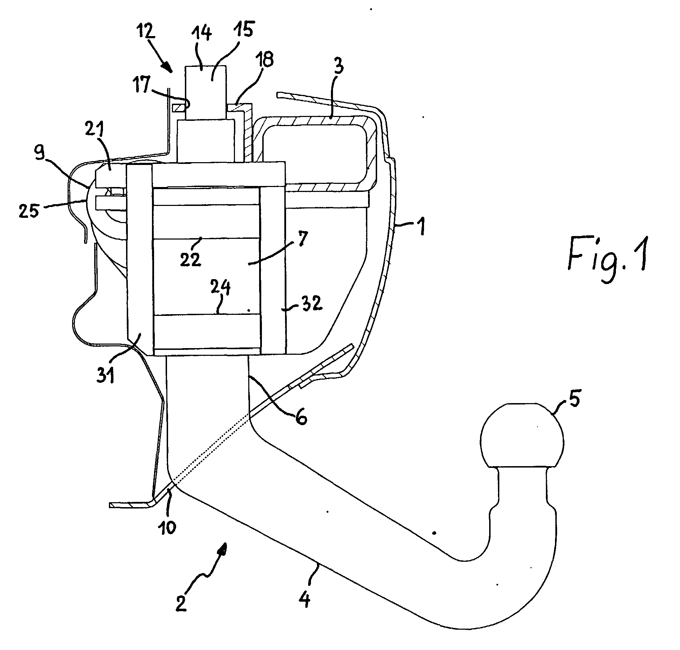

In der Zeichnung ist die einen hinteren Stoßfänger bildende Heckschürze 1 eines Personenkraftwagens angedeutet, in deren Bereich eine Anhängerkupplung 2 angeordnet ist. Dabei ist die Anhängerkupplung 2 vor (mit "vorne" ist die Richtung zum vorderen Fahrzeugende hin gemeint) der Heckschürze 1 fest mit dem Fahrzeugchassis verbunden, beispielsweise mit einem Querträger 3, der nur in Figur 1 gezeichnet ist. Die beim Ziehen eines Anhängers auftretenden Kräfte werden über den Querträger 3 in das Fahrzeugchassis eingeleitet.

Die Anhängerkupplung 2 weist, wie bei Anhängerkupplungen allgemein üblich, einen Kupplungsarm 4 auf, der einenends, an seinem freien Ende, ein hochstehend angeordnetes Kopfstück 5 kugeliger Gestalt trägt, an dem ein Anhänger lösbar befestigt werden kann. An seinem entgegengesetzten Ende ist der Kupplungsarm 4 mit einem ebenfalls hochstehenden Drehachsglied 6 fest, beim Ausführungsbeispiel einstückig, verbunden, das verdrehbar in einem Drehlagerteil 7 gelagert ist.

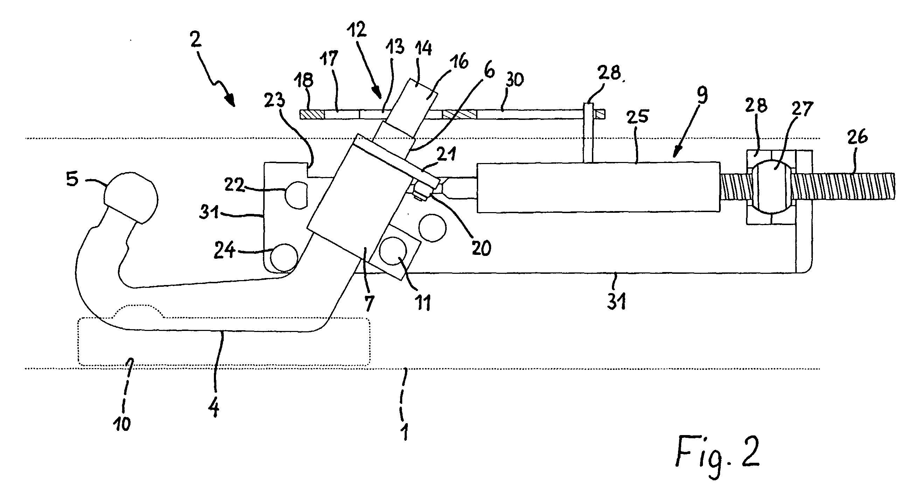

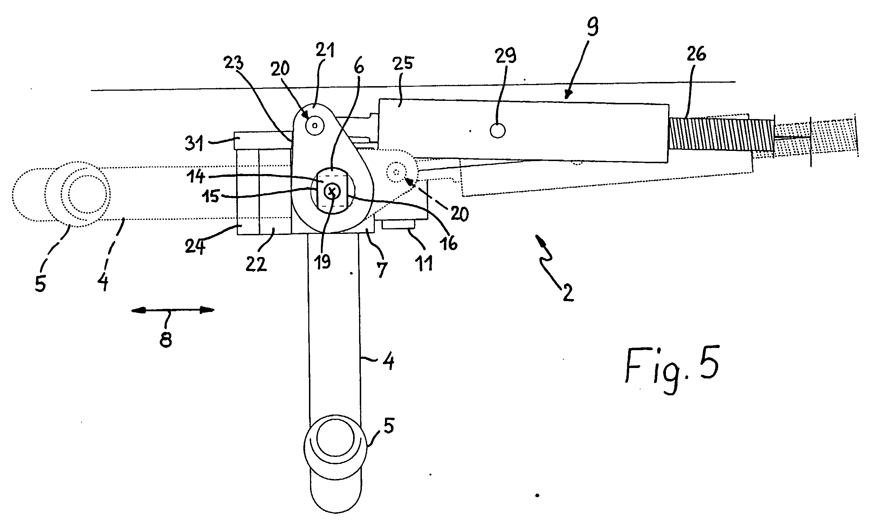

Der Kupplungsarm 4 ist zwischen einer im am Fahrzeug montierten Zustand nach hinten gerichteten Gebrauchsstellung (Figuren 1, 2 und ausgezogene Linien in Figur 5) und einer weiter vorne und höher angeordneten Nichtgebrauchsstellung (Figuren 2 und gestrichelt dargestellt in Figur 5) hin und her verstellbar. In der Nichtgebrauchsstellung befindet sich der Kupplungsarm 4 mit dem Kopfstück 5 vor der Heckschürze 1, so dass er nach hinten hin verdeckt angeordnet ist. Die Heckschürze 1 dient somit als Sichtabdeckung, die den in seiner Nichtgebrauchsstellung befindlichen Kupplungsarm 4 unsichtbar macht. Dabei verläuft der Kupplungsarm 4 in seiner Nichtgebrauchsstellung im wesentlichen in einer quer zur Längsrichtung des Fahrzeugs stehenden Querrichtung 8 der Heckschürze 1 entlang zur Seite hin. Prinzipiell könnte der Kupplungsarm in seiner Nichtgebrauchsstellung auch vor einem anderen Fahrzeugteil als der Heckschürze 1 versteckt untergebracht sein.

In seiner Gebrauchsstellung steht der Kupplungsarm 4 dagegen vor die Heckschürze 1 vor, so dass das Kopfstück 5 zugänglich ist und ein Anhänger angekuppelt werden kann.

Die Verstellung des Kupplungsarms 4 zwischen der Nichtgebrauchsstellung und der Gebrauchsstellung sowie umgekehrt erfolgt mittels einer Motoranordnung, die von einer einzigen Antriebseinrichtung 9 gebildet wird. Der Antriebseinrichtung 9 ist mindestens ein Bedienelement im Fahrzeug-Innenraum zugeordnet, so das sie vom Fahrer des Kraftfahrzeugs eingeschaltet werden kann. Die Antriebseinrichtung 9 wird elektrisch betrieben. Die Stromversorgung erfolgt vom Bordnetz des Kraftfahrzeugs her. Die zugehörigen Leitungen und Elektronikelemente wurden in der Zeichnung weggelassen. Die entsprechende Beschaltung kann von einem Fachmann ohne weiteres durchgeführt werden.

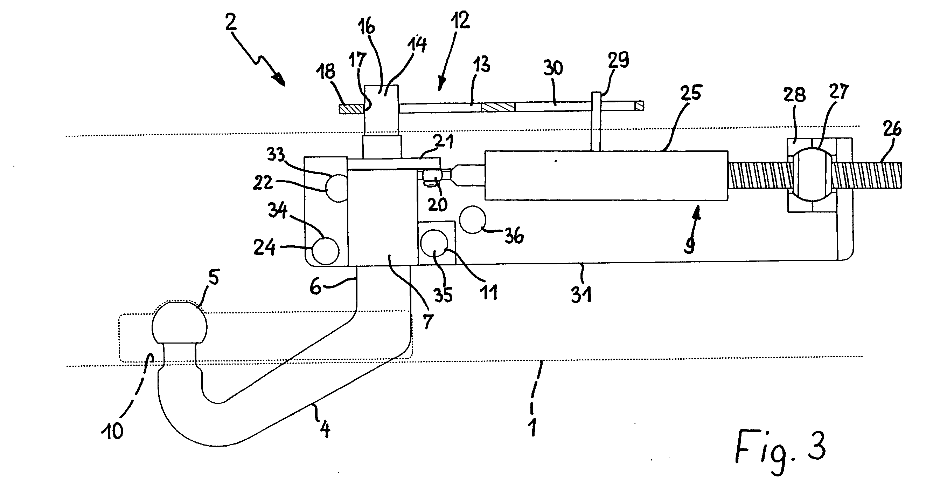

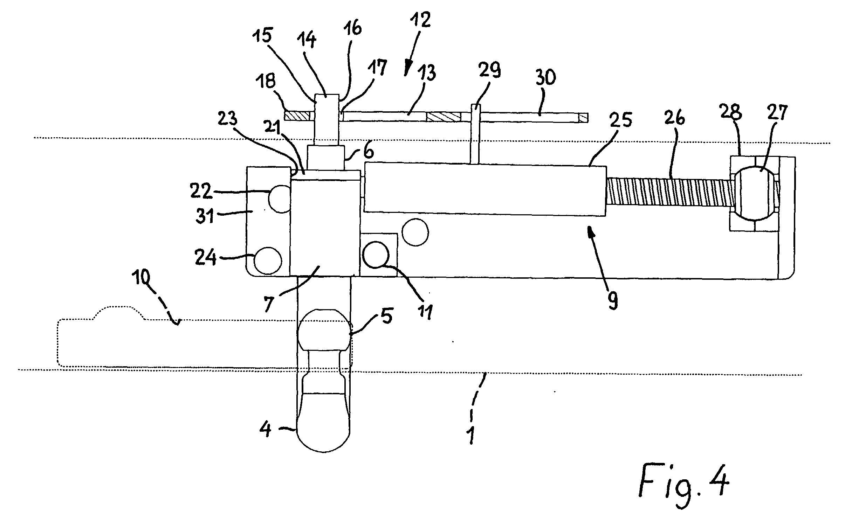

Die Verstellbewegung des Kupplungsarms 4 setzt sich aus zwei Bewegungsabschnitten zusammen. Ausgehend von der Gebrauchsstellung wird der Kupplungsarm 4 in einem ersten Bewegungsabschnitt durch Verdrehen des Drehachsgliedes 6 im hierbei die aus den Figuren 3 und 4 hervorgehende Hochstellung (im am Fahrzeug montierten Zustand verläuft das Drehachsglied 6 hierbei vertikal) einnehmenden Drehlagerteil 7 nach vorne in seine in Figur 3 gezeigte Zwischenstellung verschwenkt, wonach er im zweiten Bewegungsabschnitt in einer der Zeichenebene der Figuren 2 bis 4 entsprechenden und die bereits erwähnte Querrichtung 8 enthaltenden Querebene aus der Zwischenstellung in die Nichtgebrauchsstellung nach oben bewegt wird. Bei diesem Bewegungsablauf bewegt sich der Kupplungsarm 4 durch eine in der Heckschürze 1 angeordnete Öffnung 10. Die die Öffnung 10 enthaltende Partie der Heckschürze 1 ist im Querschnitt (Figur 1) in Richtung nach vorne unten hin geneigt, so dass der Kupplungsarm 4 auch dann durch die Öffnung 10 passt, wenn die Öffnung 10, wie beim Ausführungsbeispiel, rundum geschlossen ist. Die Öffnung 10 befindet sich im wesentlichen in der bereits erwähnten Querebene, so dass der Kupplungsarm 4 im zweiten Bewegungsabschnitt durch die Öffnung 10 gelangt.

Im zweiten Bewegungsabschnitt führt der Kupplungsarm 4 eine Schwenkbewegung nach oben bzw. beim Ausfahren des Kupplungsarms 4 aus seiner Nichtgebrauchsstellung nach unten hin aus. Hierzu ist das Drehlagerteil 7 um eine rechtwinkelig zur Querebene gerichtete Schwenkachse 11 zwischen seiner Hochstellung und einer der Nichtgebrauchsstellung des Kupplungsarms 4 entsprechenden Schrägstellung (Figur 2) schwenkbar angeordnet. Beim Verschwenken des Drehlagerteils 7 nimmt dieses das in ihm gelagerte Drehachsglied 6 und somit den Kupplungsarm 4 mit. Im am Fahrzeug befestigten Zustand erstreckt sich die Schwenkachse 11 in Fahrzeug-Längsrichtung. Beim Ausführungsbeispiel durchläuft der Kupplungsarm 4 im ersten Bewegungsabschnitt in der Horizontalen einen Schwenkwinkel von etwa 90° und im zweiten Bewegungsabschnitt in der Querebene einen Schwenkwinkel im Bereich von etwa 30°.

Die Schwenkachse 10 ist feststehend, d.h. im am Fahrzeug montierten Zustand der Kupplung fahrzeugfest angeordnet.

Dem Drehachsglied 6 ist eine Führungseinrichtung 12 (in Figur 5 weggelassen) zugeordnet, die das Drehachsglied 6 im zweiten Bewegungsabschnitt verdrehfest bezüglich des Drehlagerteils 7 hält. Diese Führungseinrichtung 12 wird beim Ausführungsbeispiel von einem feststehenden, in der Querebene verlaufenden Führungsschlitz 13 gebildet, in den ein am Drehachsglied 6 angeordneter Führungsabschnitt 14 greift, der mindestens eine, beim Ausführungsbeispiel zwei einander entgegengesetzte Flachseiten 15, 16 aufweist, so dass er beim Verschwenken des Drehlagerteils 7 unverdrehbar im Führungsschlitz 13 läuft. Das Drehachsglied 6 durchsetzt das Drehlagerteil 7, wobei der Führungsabschnitt 14 des Drehachsgliedes 6 oberhalb des Drehlagerteils 7 angeordnet ist. Dementsprechend befindet sich die Führungseinrichtung 12 an der Oberseite der Anhängerkupplung 2. An den Führungsschlitz 13 schließt sich eine Schlitzerweiterung 17 an, in der sich der Führungsabschnitt 14 befindet, wenn das Drehlagerteil 7 seine Hochstellung einnimmt und das Drehachsglied 6 somit vertikal steht.

Die Schlitzerweiterung 17 ist so bemessen, dass sich der Führungsabschnitt 14 des Drehachsgliedes 6 in ihr verdrehen kann, so dass sich der Kupplungsarm 4 aus der Zwischenstellung in die Gebrauchsstellung und umgekehrt verschwenken lässt.

Der Führungsschlitz 13 ist in einem Metallblechstück 18 ausgebildet.

Den beiden Bewegungsabschnitten des Kupplungsarms 4 ist, wie schon erwähnt, eine einzige Antriebseinrichtung 9 zugeordnet. Dabei ist die Antriebseinrichtung 9 an einer exzentrisch zur Achslinie 19 des Drehachsgliedes 6 angeordneten Gelenkstelle 20 gelenkig mit dem Drehachsglied verbunden. Die Gelenkstelle 20 ist drehfest zum Drehachsglied 6 angeordnet. Beim Ausführungsbeispiel sitzt die Gelenkstelle 20 nicht unmittelbar am Drehachsglied 6 sondern an einem fest mit dem Drehachsglied 6 verbundenen Hebelarmglied 21. Dabei kann die Gelenkstelle kugelgelenkartig ausgebildet sein und beispielsweise von einem sogenannten Schwenkauge gebildet werden.

In Zusammenhang mit der Antriebseinrichtung 9 ist dem Drehlagerteil 7 ein seine Hochstellung vorgebendes Anschlagglied 22 und dem Drehachsglied 6 ein die Gebrauchsstellung des Kupplungsarms 4 vorgebendes Anschlagelement 23 zugeordnet.

Setzt man, ausgehend von der Nichtgebrauchsstellung, die Antriebseinrichtung 9 in Gang, wird das Drehlagerteil 7 über das Hebelarmglied 21 und das durch den Führungsschlitz 13 in seiner Drehlage festgehaltene Drehachsglied 6 aus seiner Schrägstellung gemäß Figur 2 um die Schwenkachse 11 in seine Hochstellung gemäß Figur 3 verschwenkt, in der es am ein weiteres Verschwenken verhindernden Anschlagglied 22 anschlägt. In dieser Stellung befindet sich der Führungsabschnitt 14 des Drehachsgliedes 6 in der Schlitzerweiterung 17, so dass sich bei weiterhin eingeschalteter Antriebseinrichtung 9 das Drehachsglied 6 aus der Zwischenstellung gemäß Figur 3 in die Gebrauchsstellung gemäß den Figuren 4 und 5 verdreht. Beim Erreichen der Gebrauchsstellung schlägt das Hebelarmglied 21 und somit das drehfest mit dem Hebelarmglied 21 verbundene Drehachsglied 6 an dem Anschlagelement 23 an. Dabei drückt die Antriebseinrichtung 9 das Hebelarmglied 21 fest gegen das Anschlagelement 23, so dass sich eine festgespannte Gebrauchsstellung ergibt. Auch das Drehlagerteil 7 liegt dabei fest am Anschlagglied 22 an.

Es versteht sich, dass das Anschlagglied 22 und das Anschlagelement 23 feststehend angeordnet sind.

Beim Überführen des Kupplungsarms 4 aus der Gebrauchsstellung in die Nichtgebrauchsstellung laufen die gleichen Vorgänge in umgekehrter Richtung ab. Ferner kann auch der Nichtgebrauchslage ein feststehender Endanschlag 24 zugeordnet sein, an dem der Kupplungsarm 4 in der Schrägstellung des Drehlagerteils 7 zur Anlage gelangt. Anstelle des Kupplungsarms könnte auch das Drehlagerteil 7 mit einem entsprechend versetzten Endanschlag zusammenwirken.

Die Antriebseinrichtung 9 wird zweckmäßigerweise von einer Motorspindel-Antriebseinrichtung gebildet. Sie weist ein Antriebsgehäuse 25 z.B. zylindrischer Gestalt auf, in dem ein Antriebsmotor, gegebenenfalls mit zugeordnetem Getriebe, untergebracht ist, der eine aus dem Antriebsgehäuse 25 vorstehende, im Antriebsgehäuse in ihrer Längsrichtung feststehend gelagerte Gewindespindel 26 zu einer Rotationsbewegung antreibt. Dabei ist das Antriebsgehäuse 25 dem Drehachsglied 6 zugewandt und mit seinem der Gewindespindel 26 entgegengesetzten Ende an der Gelenkstelle 20 angelenkt. Ferner steht die beim Betrieb rotierende Gewindespindel 26 mit einer ortsfest gelenkig gelagerten Spindelmutter 27 in Gewindeeingriff. Schaltet man den Antriebsmotor der Antriebseinrichtung 9 ein, bewegt sich die Antriebseinrichtung 9 je nach der Rotationsrichtung der Spindel 26 auf Grund des Gewindeeingriffs mit der Spindelmutter 27 in die eine oder andere Richtung, wie aus einem Vergleich der Figuren 2 bis 4 ersichtlich ist. In der einen Richtung wird der Kupplungsarm 4 in die Gebrauchsstellung und in der anderen Richtung in die Nichtgebrauchsstellung überführt. Durch eine entsprechende elektrische Beschaltung kann die Gewindespindel 26 sowohl in der einen als auch in der anderen Drehrichtung rotieren.

Beim Ausführungsbeispiel weist die Spindelmutter 27 eine teilkugelförmige Gestalt auf und ist in einer entsprechend kugelförmigen Lagerschale 28 gelagert, so dass sich eine kugelgelenkartige Anordnung ergibt.

Die Motorspindel-Antriebseinrichtung 9 erstreckt sich im wesentlichen in Querrichtung. Bei der Verstellbewegung des Kupplungsarms 4 verschwenkt sie sich etwas im Raum.

Aus Figur 5 geht hervor (siehe die gestrichelt eingezeichnete Nichtgebrauchsstellung), dass die durch die Gelenkstelle 20 gehende Achslinie der Gewindespindel 26 in der Nichtgebrauchsstellung an der Achslinie 19 des Drehachsgliedes 6 vorbei verläuft, so dass nach dem Einschalten der Antriebseinrichtung 9 ein Drehmoment auf das Hebelarmglied 21 und somit auf das Drehachsglied 6 ausgeübt wird.

Das Drehlagerteil 7 mit dem Drehachsglied 6 befindet sich zwischen der einerseits angeordneten Antriebseinrichtung 9 und dem Anschlagglied 22 und dem Anschlagelement 23, die andererseits angeordnet sind.

Wie bereits erwähnt, erstreckt sich die Antriebseinrichtung 9 im wesentlischen in Querrichtung. Da außerdem der Kupplungsarm 4 in der Nichtgebrauchsstellung in der Querebene angeordnet ist, ergibt sich eine in Längsrichtung des Fahrzeugs flach bauende Anhängerkupplung 2.

Damit der Kupplungsarm 4 bei ausgeschalteter Antriebseinrichtung 9 in der Gebrauchsstellung bleibt, ist die Motorspindel-Antriebseinrichtung 9, d.h. der Gewindeeingriff zwischen der Gewindespindel 26 und der Spindelmutter 27, zweckmäßigerweise selbsthemmend ausgebildet.

Die Endabschaltung der Antriebseinrichtung 9 in der Gebrauchsstellung und in der Nichtgebrauchsstellung kann durch Auswertung des Motorstromes erfolgen. Steigt der Motorstrom stark an, ist die jeweilige Stellung erreicht.

Die Motorspindel-Antriebseinrichtung 9 kann ferner durch entsprechende Beschaltung selbsttätig nachstellend ausgebildet werden.

Das Antriebsgehäuse 25 ist drehfest angeordnet, damit bei eingeschaltetem Motor die Gewindespindel 26 rotiert. Dabei wird das Antriebsgehäuse 25 an der Gelenkstelle 20 zwar festgehalten, das hier vorhandene Gelenk ermöglicht jedoch ein geringes Verdrehen. Ohne weitere Maßnahmen hätte dies zur Folge, dass nach dem Erreichen der Gebrauchsstellung, wenn der Antriebsmotor abgeschaltet wird, der Anpressdruck gegen das Anschlagglied 22 und das Anschlagelement 23 etwas nachlässt. Um dies zu vermeiden, ist das Antriebsgehäuse 25 bei seiner Antriebsbewegung unverdrehbar geführt. Hierzu ist außen am Antriebsgehäuse 25 ein Führungsvorsprung 29 angeordnet, der in einer feststehenden Führungsausnehmung 30 läuft. Die Führungsausnehmung 30 kann beispielsweise im auch den Führungsschlitz 13 enthaltenden Metallblechstück 18 angeordnet sein. Der Führungsvorsprung könnte jedoch auch in eine andere Richtung vom Antriebsgehäuse 25 abstehen, so dass das die Führungsausnehmung 30 bildende Teil entsprechend woanders angeordnet wäre.

Die Anhängerkupplung 2 weist einen sehr kompakten und platzsparenden Aufbau auf. Sie enthält zwei beiderseits des Drehlagerteils 7 mit dem Drehachsglied 6 und der Antriebseinrichtung 9 angeordnete Basisplatten 31, 32, die im montierten Zustand fahrzeugfest angeordnet sind und dabei hochkant stehen und in Querrichtung verlaufen. Die beiden Basisplatten 31, 32 sind durch mehrere Verbindungsbolzen 33, 34, 35, 36 miteinander verbunden, denen noch eine weitere Funktion zugeordnet werden kann. So bildet der Verbindungsbolzen 33 gleichzeitig das Anschlagglied 22 und der Verbindungsbolzen 34 den Endanschlag 24. Ferner stellt der Verbindungsbolzen 35 gleichzeitig die Schwenkachse 11 dar.

Das Anschlagelement 23 wird von einem Absatz an der Basisplatte 31 gebildet.

## Patentansprüche

1. Anhängerkupplung für Kraftfahrzeuge, insbesondere Personenkraftwagen, mit einem Kupplungsarm (4), der einenends ein hochstehend angeordnetes Kopfstück (5) zum lösbaren Befestigen eines Anhängers trägt und andernends mit einem verdrehbar in einem Drehlagerteil (7) gelagerten Drehachsglied (6) fest verbunden ist, wobei der Kupplungsarm (4) mittels einer vom Fahrzeug-Innenraum aus einschaltbaren Motoranordnung zwischen einer im am Fahrzeug montierten Zustand nach hinten gerichteten Gebrauchsstellung und einer weiter vorne und höher angeordneten Nichtgebrauchsstellung hin und her verstellbar ist und wobei die Verstellbewegung sich aus zwei Bewegungsabschnitten zusammensetzt, indem der Kupplungsarm (4), ausgehend von der Gebrauchsstellung, in einem ersten Bewegungsabschnitt durch Verdrehen des Drehachsgliedes (6) im eine Hochstellung einnehmenden Drehlagerteil (7) nach vorne in eine Zwischenstellung verschwenkt und anschließend im zweiten Bewegungsabschnitt in einer Querebene aus der Zwischenstellung in die Nichtgebrauchsstellung nach oben bewegt wird, **dadurch gekennzeichnet, dass** das Drehlagerteil (7) um eine rechtwinkelig zur Querebene gerichtete Schwenkachse (11) zwischen seiner Hochstellung und einer Schrägstellung schwenkbar ist und im zweiten Bewegungsabschnitt aus der Hochstellung in die Schrägstellung verschwenkt wird, so dass der Kupplungsarm (4) nach oben schwenkt, dass dem Drehachsglied (6) eine es im zweiten Bewegungsabschnitt verdrehfest bezüglich des Drehlagerteils (7) haltende Führungseinrichtung (12) zugeordnet ist und dass die Motoranordnung von einer beiden Bewegungsabschnitten zugeordneten Antriebseinrichtung (9) gebildet wird, die an einer exzentrisch zur Achslinie (19) des Drehachsgliedes (6) drehfest zu diesem angeordneten Gelenkstelle (20) gelenkig mit dem Drehachsglied (6) verbunden ist, derart, dass, ausgehend von der Nichtgebrauchsstellung, die Antriebseinrichtung (9) über das in seiner Drehlage durch die Führungseinrichtung (12) festgehaltene Drehachsglied (6) das Drehlagerteil (7) gegen ein die Hochstellung des Drehlagerteils (7) vorgebendes Anschlagglied (22) schwenkt, wonach das Drehachsglied (6) von der Führungseinrichtung (12) freikommt und die Antriebseinrichtung (9) das Drehachsglied (6) bis zu einem die Gebrauchsstellung vorgebenden Anschlagelement (23) verdreht.

2. Anhängerkupplung nach Anspruch 1, **dadurch gekennzeichnet, dass** dem Drehachsglied (6) oder dem Drehlagerteil ein die Nichtgebrauchslage vorgebender Endanschlag (24) zugeordnet ist.

3. Anhängerkupplung nach Anspruch 1 oder 2, **dadurch gekennzeichnet, dass** die Gelenkstelle (20) an einem fest mit dem Drehachsglied (6) verbundenen Hebelarmglied (21) angeordnet ist.

4. Anhängerkupplung nach einem der Ansprüche 1 bis 3, **dadurch gekennzeichnet, dass** die Führungseinrichtung (12) einen feststehenden, in der Querebene verlaufenden Führungsschlitz (13) enthält, in dem ein mindestens eine Flachseite (15, 16) aufweisender Führungsabschnitt (14) des Drehachsgliedes (6) läuft.

5. Anhängerkupplung nach Anspruch 4, **dadurch gekennzeichnet, dass** an den Führungsschlitz (13) sich eine in der Hochstellung des Drehlagerteils (7) vom Führungsabschnitt (14) durchgriffene Schlitzerweiterung (17) anschließt, in der der Führungsabschnitt (14) verdrehbar ist.

6. Anhängerkupplung nach einem der Ansprüche 1 bis 5, **dadurch gekennzeichnet, dass** die Antriebseinrichtung (9) von einer Motorspindel-Antriebseinrichtung gebildet wird.

7. Anhängerkupplung nach Anspruch 6, **dadurch gekennzeichnet, dass** sich die Motorspindel-Antriebseinrichtung (9) im wesentlichen in Querrichtung erstreckt.

8. Anhängerkupplung nach Anspruch 6 oder 7, **dadurch gekennzeichnet, dass** die Motorspindel-Antriebseinrichtung (9) selbsthemmend ausgebildet ist.

9. Anhängerkupplung nach einem der Ansprüche 6 bis 8, **dadurch gekennzeichnet, dass** die Motorspindel-Antriebseinrichtung (9) selbsttätig nachstellend ausgebildet ist.

10. Anhängerkupplung nach einem der Ansprüche 6 bis 9, **dadurch gekennzeichnet, dass** die Motorspindel-Antriebseinrichtung (9) einerseits mit ihrem den Antriebsmotor enthaltenden Antriebsgehäuse (25) dem Drehachsglied (6) zugewandt und an der Gelenkstelle (20) angelenkt ist und andererseits mit ihrer beim Betrieb rotierenden Gewindespindel (26) mit einer ortsfest gelenkig gelagerten Spindelmutter (27) in Gewindeeingriff steht.

11. Anhängerkupplung nach Anspruch 10, **dadurch gekennzeichnet, dass** das Antriebsgehäuse (25) bei seiner Antriebsbewegung unverdrehbar geführt ist.

12. Anhängerkupplung nach Anspruch 11, **dadurch gekennzeichnet, dass** ein am Antriebsgehäuse (25) angeordneter Führungsvorsprung (29) in einer feststehenden Führungsausnehmung (30) läuft.

13. Anhängerkupplung nach einem der Ansprüche 1 bis 12, **dadurch gekennzeichnet, dass** sie zwei beiderseits des Drehlagerteils (7) mit dem Drehachsglied (6) und der Antriebseinrichtung (9) angeordnete, im montierten Zustand hochkant quer verlaufende, fahrzeugfeste Basisplatten (31, 32) aufweist.

14. Anhängerkupplung nach Anspruch 13, **dadurch gekennzeichnet, dass** die Basisplatten (31, 32) durch Verbindungsbolzen (33, 34, 35, 36) miteinander verbunden sind, die das Anschlagglied (22) und/oder den Endanschlag (24) und/oder die Schwenkachse (11) bilden.

15. Anhängerkupplung nach einem der Ansprüche 1 bis 14, **dadurch gekennzeichnet, dass** sie zwei beiderseits des Drehlagerteils (7) mit dem Drehachsglied (6) und der Antriebseinrichtung (9) angeordnete, im montierten Zustand hochkant quer verlaufende, fahrzeugfeste Basisplatten (31, 32) aufweist, wobei das Anschlagelement (23) von einem Absatz an einer der Basisplatten gebildet wird.

## Claims

1. Trailer coupling for motor vehicles, in particular cars, with a coupling arm (4) carrying at one end an upright head section (5) for the releasable fastening of a trailer and firmly connected at the other end by a hinge pin element (6) mounted rotatably in a rotary bearing part (7), wherein the coupling arm (4) is adjustable to and fro, by means of a motor assembly able to be switched on from the vehicle interior, between a position of use mounted on the vehicle and facing towards the rear, and an inoperative position in which it is positioned further forward and higher, and wherein the adjustment movement is comprised of two movement sections, in which the coupling arm (4), starting from the position of use, swivels in a first movement section through rotation of the hinge pin element (6) in the rotary bearing part (7) which assumes a raised position, forwards into an intermediate position, and then in the second movement section is moved upwards in a lateral plane from the intermediate position into the inoperative position, **characterised in that** the rotary bearing part (7) may be swivelled around a swivel axis (11) aligned at right-angles to the lateral plane between a raised position and an inclined position, and in the second movement section is swivelled from the raised position into the inclined position, so that the coupling arm (4) swings upwards, that the hinge pin element (6) is assigned a guide fixture (12) holding it in the second movement section non-rotatable relative to the rotary bearing part (7), and that the motor assembly is formed by a drive unit (9) assigned to both movement sections and which is pivotably connected to the hinge pin element (6) at a hinge point (20) arranged eccentrically to the axis line (19) of the hinge pin element (6) and non-rotatable relative to the latter in such a way that, starting from the inoperative position, the drive unit (9) swivels the rotary bearing part (7) through the hinge pin element (6) held firmly in its rotary position by the guide fixture (12), against a stop element (22) which presets the raised position of the rotary bearing part (7), whereupon the hinge pin element (6) is released from the guide fixture (12) and the drive unit (9) rotates the hinge pin element (6) as far as a stop element (23) presetting the position of use.

2. Trailer coupling according to claim 1, **characterised in that** a limit stop (24) presetting the inoperative position is assigned to the hinge pin element (6) or the rotary bearing part.

3. Trailer coupling according to claim 1 or 2, **characterised in that** the hinge point (20) is located at a lever ann element (21) firmly connected to the hinge pin element (6).

4. Trailer coupling according to any of claims 1 to 3, **characterised in that** the guide fixture (12) contains a fixed guide slot (13) running in the lateral plane and in which runs a guide section (14) of the hinge pin element (6) which has one or more flat sides (15, 16).

5. Trailer coupling according to claim 4 **characterised in that**, adjacent to the guide slot (13), there is a slot enlargement (17) through which the guide section (14) passes in the raised position of the rotary bearing part (7) and in which the guide section (14) is rotatable.

6. Trailer coupling according to any of claims 1 to 5, **characterised in that** the drive unit (9) is formed by a motor spindle drive unit.

7. Trailer coupling according to claim 6, **characterised in that** the motor spindle drive unit (9) extends substantially in the lateral direction.

8. Trailer coupling according to claim 6 or 7, **characterised in that** the motor spindle drive unit (9) is irreversible.

9. Trailer coupling according to any of claims 6 to 8, **characterised in that** the motor spindle drive unit (9) is automatically readjusting.

10. Trailer coupling according to any of claims 6 to 9, **characterised in that** the motor spindle drive unit (9) at one end faces, with its drive housing (25) containing the drive motor, the hinge pin element (6) and is hinged at the hinge point (20), and at the other end its threaded spindle (26) which rotates in operation is in threaded engagement with a stationary, pivotably mounted spindle nut (27).

11. Trailer coupling according to claim 10, **characterised in that** during its driving movement the drive housing (25) is guided non-rotatably.

12. Trailer coupling according to claim 11, **characterised in that** a guide projection (29) fitted to the drive housing (25) runs in a fixed guide recess (30).

13. Trailer coupling according to any of claims 1 to 12, **characterised in that** it has two baseplates (31, 32) fixed to the vehicle, arranged either side of the rotary bearing part (7) with the hinge pin element (6) and the drive unit (9), running transversely on end in the assembled state.

14. Trailer coupling according to claim 13, **characterised in that** the baseplates (31, 32) are connected to one another by connecting pins (33, 34, 35, 36) which form the stop element (22) and/or the limit stop (24) and/or the swivel axis (11).

15. Trailer coupling according to any of claims 1 to 14, **characterised in that** it has two baseplates (31, 32) fixed to the vehicle, arranged either side of the rotary bearing part (7) with the hinge pin element (6) and the drive unit (9), running transversely on end in the assembled state, with the stop element (23) being formed by a shoulder on one of the baseplates.

## Revendications

1. Attelage de remorque pour véhicules automobiles, en particulier pour voitures de tourisme, avec un bras d'attelage (4) qui porte, à une extrémité, une pièce de tête (5) disposée verticalement pour la fixation séparable d'une remorque et, à l'autre extrémité, est relié fixement à un axe de rotation (6) monté tournant dans une partie de palier de rotation (7), le bras d'attelage (4) étant déplaçable en sens alternés, au moyen d'un dispositif à moteur pouvant être commandé depuis l'habitacle du véhicule, entre une position d'utilisation dirigée vers l'arrière à l'état monté sur le véhicule, et une position de non-utilisation disposée plus loin vers l'avant et plus haut, et le mouvement de déplacement se composant de deux tronçons de déplacement du fait que le bras d'attelage (4), partant de la position d'utilisation, pivote vers l'avant dans une position intermédiaire, dans un premier tronçon de déplacement, par rotation de l'axe de rotation (6) dans la partie de palier de rotation (7) prenant une position haute, puis est déplacé vers le haut, dans le deuxième tronçon de déplacement, dans un plan transversal, depuis la position intermédiaire dans la position de non-utilisation, **caractérisé en ce que** la partie de palier de rotation (7) peut pivoter autour d'un axe de pivotement (11), dirigé perpendiculairement au plan transversal, entre sa position haute et une position oblique, et est pivoté, dans le deuxième tronçon de déplacement, depuis la position haute dans la position oblique, ce qui fait que le bras d'attelage pivote vers le haut, **en ce qu'**à l'axe de rotation (6) est associé un dispositif de guidage (12) le maintenant, dans le deuxième tronçon de déplacement, dans l'impossibilité de tourner par rapport à la partie de palier de rotation (7), et **en ce que** le dispositif à moteur est formé par un dispositif d'entraînement (9) associé aux deux tronçons de déplacement, lequel est relié, de manière articulée, à l'axe de rotation (6), en un point d'articulation (20) disposé excentré par rapport à la ligne axiale (19) de l'axe de rotation (6), solidairement en rotation avec celui-ci, de manière que, partant de la position de non-utilisation, le dispositif d'entraînement (9) fasse pivoter, par l'intermédiaire de l'axe de rotation (6) fixé dans sa position de rotation par le dispositif de guidage (12), la partie de palier de rotation (7) contre un organe de butée (22) prédéfinissant la position haute de la partie de palier de rotation (7), après quoi, l'axe de rotation (6) se dégage du dispositif de guidage (12) et le dispositif d'entraînement (9) fait tourner l'axe de rotation (6) jusqu'à un élément de butée (23) prédéfinissant la position d'utilisation.

2. Attelage de remorque selon la revendication 1, **caractérisé en ce qu'**à l'axe de rotation (6) ou à la partie de palier de rotation est associée une butée de fin de course (24) prédéfinissant la position de non-utilisation.

3. Attelage de remorque selon la revendication 1 ou 2, **caractérisé en ce que** le point d'articulation (20) est situé sur un organe à bras de levier (21) solidaire de l'axe de rotation (6).

4. Attelage de remorque selon l'une des revendications 1 à 3, **caractérisé en ce que** le dispositif de guidage (12) contient une fente de guidage (13) fixe, s'étendant dans le plan transversal, dans laquelle passe un tronçon de guidage (14) de l'axe de rotation (6), présentant au moins une face plate (15, 16).

5. Attelage de remorque selon la revendication 4, **caractérisé en ce qu'**à la fente de guidage (13) se raccorde un élargissement (17) de la fente traversée, en position haute de la partie de palier de rotation (7), par le tronçon de guidage (14), dans lequel le tronçon de guidage (14) peut tourner.

6. Attelage de remorque selon l'une des revendications 1 à 5, **caractérisé en ce que** le dispositif d'entraînement (9) est formé par un dispositif d'entraînement à broche de moteur.

7. Attelage de remorque selon la revendication 6, **caractérisé en ce que** le dispositif d'entraînement à broche de moteur (9) s'étend sensiblement dans la direction transversale.

8. Attelage de remorque selon la revendication 6 ou 7, **caractérisé en ce que** le dispositif d'entraînement à broche de moteur (9) est réalisé autobloquant.

9. Attelage de remorque selon l'une des revendications 6 à 8, **caractérisé en ce que** le dispositif d'entraînement à broche de moteur (9) est réalisé avec rattrapage de jeu automatique.

10. Attelage de remorque selon l'une des revendications 6 à 9, **caractérisé en ce que** le dispositif d'entraînement à broche de moteur (9) est tourné d'une part vers l'axe de rotation (6), par son carter d'entraînement (25) contenant le moteur d'entraînement, et est articulé au point d'articulation (20), et est en prise filetée d'autre part, par sa broche filetée (26), tournant pendant le fonctionnement, avec un écrou pour broche (27) monté articulé en un emplacement fixe.

11. Attelage de remorque selon la revendication 10, **caractérisé en ce que** le carter d'entraînement (25) est guidé de manière à ne pouvoir tourner pendant son mouvement d'entraînement.

12. Attelage de remorque selon la revendication 11, **caractérisé en ce qu'**une saillie de guidage (29), prévue sur le carter d'entraînement (25), passe dans un évidement de guidage (30) fixe.

13. Attelage de remorque selon l'une des revendications 1 à 12, **caractérisé en ce qu'**il comporte deux plaques de base (31, 32) solidaires du véhicule, disposées des deux côtés de la partie de palier de rotation (7), avec l'axe de rotation (6) et le dispositif d'entraînement (9), s'étendant transversalement de champ à l'état monté.

14. Attelage de remorque selon la revendication 13, **caractérisé en ce que** les plaques de base (31, 32) sont reliées entre elles par des boulons de liaison (33, 34, 35, 36) qui forment l'organe de butée (22) et/ou la butée de fin de course (24) et/ou l'axe de pivotement (11).

15. Attelage de remorque selon l'une des revendications 1 à 14, **caractérisé en ce qu'**il comporte deux plaques de base (31, 32) solidaires du véhicule, disposées des deux côtés de la partie de palier de rotation (7), avec l'axe de rotation (6) et le dispositif d'entraînement (9), s'étendant transversalement de champ à l'état monté, l'élément de butée (23) étant formé par un talon sur l'une des deux plaques de base.
